# EUROPEAN PATENT APPLICATION

(11) **EP 4 142 004 A1**
(43) Date of publication of application: **01.03.2023**
(21) Application number: 21792989.2
(22) Date of filing: 04.03.2021
(51) Int. Cl.: H01M 10/0562, H01M 10/0585, H01M 50/262

(54) **BATTERY AND BATTERY MANUFACTURING METHOD**

(30) Priority: 23.04.2020 JP 2020076722
(71) Applicant: Panasonic Intellectual Property Management Co., Ltd., Osaka-shi, Osaka 540-6207 (JP)
(72) Inventor: KANEYAMA, Akio, Osaka-shi, Osaka 540-6207 (JP); KAWASE, Akira, Osaka-shi, Osaka 540-6207 (JP); MORIOKA, Kazuhiro, Osaka-shi, Osaka 540-6207 (JP)
(74) Representative: Eisenführ Speiser
(86) International application number: PCT/JP2021/008440
(87) International publication number: WO 2021/215125

(57) **Abstract**

A battery includes: a power generating element that includes at least one solid-state battery cell that includes a positive electrode, a solid electrolyte layer, and a negative electrode which are laminated; a first pressurizing member in contact with a first principal surface of the power generating element; a second pressurizing member in contact with a second principal surface of the power generating element, the second principal surface being opposite to the first principal surface; and an insulating member. The first pressurizing member includes a first void. The second pressurizing member includes a second void. The insulating member includes a side surface portion that covers a side surface of the power generating element, and an extending portion that extends from the side surface portion into each of the first void and the second void.

## Description

### Technical Field

The present disclosure relates to a battery and a method of manufacturing a battery.

### Background Art

There has hitherto been known a laminate battery in which a plurality of power generating elements are sealed in a laminate film as a lightweight battery with high energy density and output density (see Patent Literature 1, for example).

### Citation List

### Patent Literature

PTL 1: Japanese Unexamined Patent Application Publication No. 2018-133175

### Summary of Invention

### Technical Problem

The present disclosure provides a battery with good charge/discharge characteristics and high energy density.

### Solution to Problem

An aspect of the present disclosure provides a battery including: a power generating element that includes at least one solid-state battery cell that includes a positive electrode, a solid electrolyte layer, and a negative electrode which are laminated; a first pressurizing member in contact with a first principal surface of the power generating element; a second pressurizing member in contact with a second principal surface of the power generating element, the second principal surface being opposite to the first principal surface; and an insulating member, in which the first pressurizing member includes a first void, the second pressurizing member includes a second void, and the insulating member includes a side surface portion that covers a side surface of the power generating element, and an extending portion that extends from the side surface portion into each of the first void and the second void.

Another aspect of the present disclosure provides a method of manufacturing a battery, including: disposing a first pressurizing member including a first void in contact with a first principal surface of a power generating element that includes at least one solid-state battery cell that includes a positive electrode, a solid electrolyte layer, and a negative electrode which are laminated, and disposing a second pressurizing member including a second void in contact with a second principal surface of the power generating element; pressurizing the power generating element as interposed between the first pressurizing member and the second pressurizing member; disposing a fluid insulating material so as to cover a side surface of the power generating element and be accommodated inside each of the first void and the second void while pressurizing the power generating element; and curing the insulating material while pressurizing the power generating element. Advantageous Effects of Invention

According to the present disclosure, it is possible to provide a battery with good charge/discharge characteristics and high energy density.

### Brief Description of Drawings

[Fig. 1] Fig. 1 includes a top view and sectional views illustrating a schematic configuration of a battery according to a first embodiment.
[Fig. 2] Fig. 2 includes a top view and sectional views illustrating a schematic configuration of a battery according to a second embodiment.
[Fig. 3] Fig. 3 includes sectional views illustrating a schematic configuration of a battery according to a third embodiment.
[Fig. 4] Fig. 4 is a sectional view illustrating a schematic configuration of a battery according to a fourth embodiment.
[Fig. 5] Fig. 5 is a sectional view illustrating a schematic configuration of a battery according to a fifth embodiment.
[Fig. 6A] Fig. 6A is a sectional view illustrating a step of a method of manufacturing a battery according to an embodiment.
[Fig. 6B] Fig. 6B is a sectional view illustrating a step of the method of manufacturing the battery according to the embodiment.
[Fig. 6C] Fig. 6C is a sectional view illustrating a step of the method of manufacturing the battery according to the embodiment.
[Fig. 6D] Fig. 6D is a sectional view illustrating a step of the method of manufacturing the battery according to the embodiment.

### Description of Embodiments

### (Underlying Knowledge Forming Basis of the Present Disclosure)

First, the point of view of the present inventors will be described below.

By binding an all-solid-state battery, active material particles and solid electrolyte particles contact each other well, and the solid electrolyte particles contact each other well. Consequently, the grain boundary resistance is reduced, which improves the charge/discharge characteristics of the battery. In this manner, binding is indispensable in order to improve the performance of the battery. However, binding requires a jig, which increases the proportion in volume of constituent elements other than elements that contribute to power generation to the entire battery. This is disadvantageous in terms of the performance of the battery per volume. That is, this makes it difficult to enhance the energy density of the battery while achieving good charge/discharge characteristics.

Thus, an aspect of the present disclosure provides a battery including: a power generating element that includes at least one solid-state battery cell that includes a positive electrode, a solid electrolyte layer, and a negative electrode which are laminated; a first pressurizing member in contact with a first principal surface of the power generating element; a second pressurizing member in contact with a second principal surface of the power generating element, the second principal surface being opposite to the first principal surface; and an insulating member. The first pressurizing member includes a first void. The second pressurizing member includes a second void. The insulating member includes a side surface portion that covers a side surface of the power generating element, and an extending portion that extends from the side surface portion into each of the first void and the second void.

Consequently, the extending portion of the insulating member can bind the first pressurizing member and the second pressurizing member in directions of approaching each other, which makes it possible to bind the power generating element interposed between the first pressurizing member and the second pressurizing member and maintain the binding. Therefore, the charge/discharge characteristics of the battery can be enhanced. There is no need for a jig that applies a binding pressure to the battery from the outside, which makes it possible to enhance the energy density of the battery. In this manner, according to the present aspect, it is possible to achieve a battery with good charge/discharge characteristics and high energy density.

The first void may extend continuously from one end to the other end of the first pressurizing member in a direction parallel to the first principal surface, for example.

Consequently, the extending portion positioned inside the first void can apply a high binding pressure to the first pressurizing member. Therefore, the charge/discharge characteristics of the battery can be further enhanced.

The first void may be a through hole that penetrates the first pressurizing member in a direction parallel to the first principal surface, for example.

Consequently, the extending portion positioned inside the first void can apply a high binding pressure to the first pressurizing member. Therefore, the charge/discharge characteristics of the battery can be further enhanced.

The first pressurizing member may include a plurality of first voids, for example. The plurality of first voids may be provided in a striped pattern as viewed in plan.

Consequently, the extending portion which is positioned inside the first void can apply a high binding pressure to the first pressurizing member, uniformly within the surface thereof. Therefore, the charge/discharge characteristics of the battery can be further enhanced.

The first pressurizing member may include a plurality of first voids, for example. The plurality of first voids may be provided in a grid pattern as viewed in plan.

Consequently, the extending portion which is positioned inside the first void can apply a high binding pressure to the first pressurizing member, uniformly within the surface thereof. Therefore, the charge/discharge characteristics of the battery can be further enhanced.

The insulating member may contain an insulative resin material, for example.

Consequently, the extending portion and the side surface portion may be integrally formed from a resin material. With the extending portion and the side surface portion strongly coupled to each other, a strong binding pressure for the power generating element can be maintained.

The first pressurizing member and the second pressurizing member may each be harder than the insulating member, for example.

Consequently, the power generating element can be strongly bound by the first pressurizing member and the second pressurizing member. Therefore, the charge/discharge characteristics of the battery can be enhanced.

The power generating element may include a plurality of solid-state battery cells, for example. The plurality of solid-state battery cells may be laminated in a direction orthogonal to the first principal surface.

In the case where an all-solid-state battery that includes a plurality of laminated solid-state battery cells is bound, the thickness of the all-solid-state battery is increased compared to the case where a single solid-state battery cell is included. Therefore, a pressure loss tends to be caused inside the group of solid-state battery cells. In order to avoid a reduction in the characteristics due to a pressure loss, it is necessary that the battery should be bound with a high binding pressure compared to the case where a single solid-state battery cell is included. With the battery according to the present aspect, the extending portion of the insulating member can apply a high binding pressure to the power generating element. Thus, according to the present aspect, it is possible to achieve a battery with good charge/discharge characteristics and high energy density.

The plurality of solid-state battery cells may be electrically connected in series, for example. The first pressurizing member and the second pressurizing member may be electrically conductive.

Consequently, the first pressurizing member and the second pressurizing member can be used as electrode terminals of the battery. There is no need to separately provide the battery with terminals, which makes it possible to enhance energy density.

Another aspect of the present disclosure provides a method of manufacturing a battery, including: disposing a first pressurizing member including a first void in contact with a first principal surface of a power generating element that includes at least one solid-state battery cell that includes a positive electrode, a solid electrolyte layer, and a negative electrode which are laminated, and disposing a second pressurizing member including a second void in contact with a second principal surface of the power generating element; pressurizing the power generating element as interposed between the first pressurizing member and the second pressurizing member; disposing a fluid insulating material so as to cover a side surface of the power generating element and be accommodated inside each of the first void and the second void while pressurizing the power generating element; and curing the insulating material while pressurizing the power generating element.

Consequently, the binding pressure for the power generating element is maintained by the cured resin material which is present inside the first void and the second void, even after the pressurization is finished. Thus, it is possible to manufacture a battery with good charge/discharge characteristics and high energy density.

Embodiments will be specifically described below while referring to the drawings.

The embodiments to be described below each indicate a generic or specific example. The numerical values, shapes, materials, constituent elements, arrangement, position, and mode of connection of the constituent elements, manufacturing steps, order of the manufacturing steps, etc. indicated in the following embodiments are exemplary, and are not intended to limit the present disclosure. Of the constituent elements in the following embodiments, constituent elements not defined in the independent claims are described as optional constituent elements.

The drawings are schematic views, and are not necessarily exact illustrations. Thus, the drawings are not necessarily to scale. In the drawings, substantially identical components are denoted by like reference numerals to omit or simplify redundant description.

Herein, the terms that indicate the relationship between the elements such as parallel and orthogonal, the terms that indicate the shape of the elements such as rectangular and circular, and the numerical ranges not only represent the exact meanings of the expressions, but also represent substantially equivalent ranges including differences of about several percent, for example.

Herein and in the drawings, the x axis, the y axis, and the z axis indicate the three axes of a three-dimensional orthogonal coordinate system. In the embodiments, the z-axis direction is defined as the thickness direction of a battery. The "thickness direction" is a direction that is perpendicular to a plane on which layers are laminated. The phrase "as viewed in plan" as used herein means a state in which the battery is seen along the laminating direction of the battery.

Regarding "in" and "out" such as those in the terms "inside" and "outside" as used herein, the "in" indicates a direction toward the center of the battery, and the "out" indicates a direction away from the center of the battery.

The terms "above" and "below" as used herein for the components of the battery do not indicate the upper direction (vertically upper) and the lower direction (vertically lower) in the absolute space recognition, and are used as terms prescribed in accordance with the relative positional relationship which is based on the laminated order of the laminated components. The terms "above" and "below" are applied not only in the case where two constituent elements are disposed with a space therebetween and with another constituent element present between the two constituent elements, but also in the case where the two constituent elements are disposed in close contact with each other.

### (First Embodiment)

### [1-1. Overview of Battery]

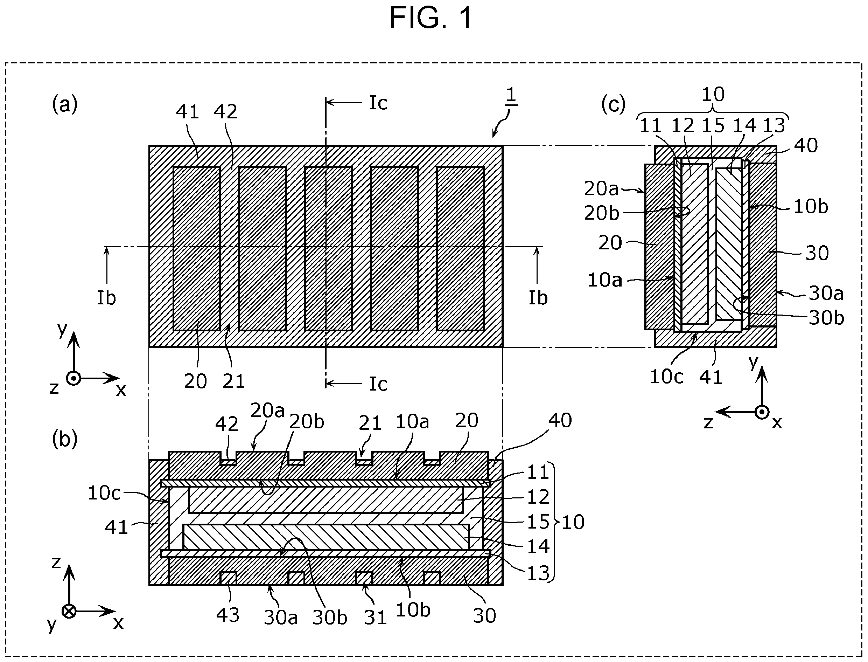

First, an overview of a battery according to a first embodiment will be described with reference to Fig. 1.

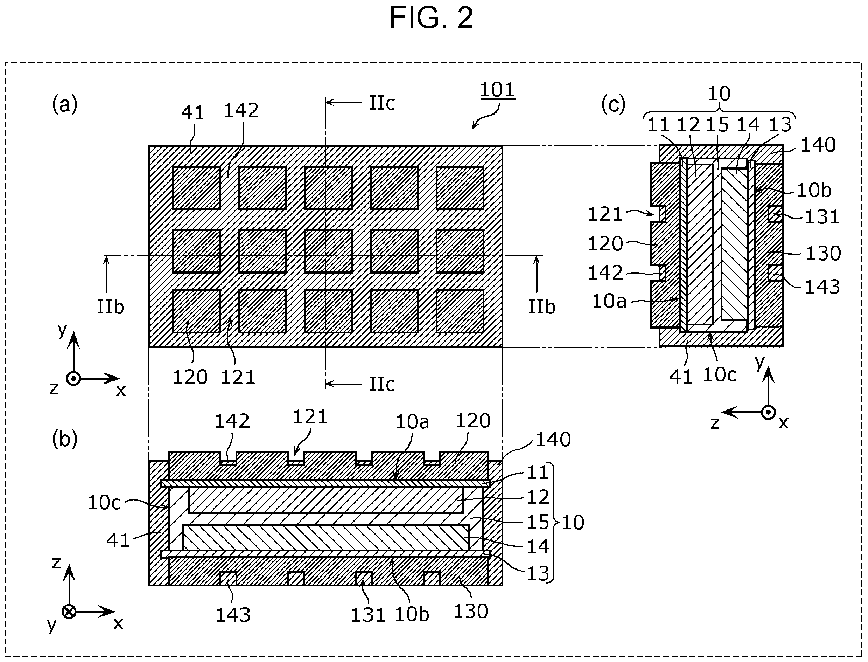

Fig. 1 includes a top view and sectional views illustrating a schematic configuration of a battery 1 according to the first embodiment. Fig. 1(a) is a plan view of the battery 1 as seen from the positive side of the z axis. Fig. 1(b) is a sectional view taken at a position indicated by the line Ib-Ib in Fig. 1(a). Fig. 1(c) is a sectional view taken at a position indicated by the line Ic-Ic in Fig. 1(a). The constituent elements in Fig. 1(a) that are the same as the constituent elements illustrated in Figs. 1(b) and 1(c) are shaded in the same manner, in order to facilitate understanding of the correspondence with Figs. 1(b) and 1(c). The same also applies to Fig. 2 to be discussed later.

As illustrated in Fig. 1, the battery 1 includes a power generating element 10, pressurizing members 20 and 30, and an insulating member 40. The battery 1 is an all-solid-state battery.

In the present embodiment, as illustrated in Fig. 1(b), the pressurizing members 20 and 30 are provided with voids 21 and 31, respectively. Extending portions 42 and 43 which are parts of the insulating member 40 are provided in the voids 21 and 31, respectively. The power generating element 10 is bound by the extending portions 42 and 43 binding the pressurizing members 20 and 30 in directions of approaching each other. That is, the binding pressure for the power generating element 10 is maintained by the insulating member 40, and thus the battery 1 with good charge/discharge characteristics can be achieved, even without a binding jig.

Constituent elements that constitute the battery 1 will be described in detail below.

### [1-2. Power Generating Element]

First, a specific configuration of the power generating element 10 will be described.

The power generating element 10 includes at least one solid-state battery cell. The solid-state battery cell has a structure in which a negative electrode current collector 13, a negative electrode active material layer 14, a solid electrolyte layer 15, a positive electrode active material layer 12, and a positive electrode current collector 11 are laminated in this order. In the present embodiment, the power generating element 10 includes only one solid-state battery cell. That is, the power generating element 10 is a solid-state battery cell. As illustrated in Figs. 1(b) and 1(c), the power generating element 10 includes the positive electrode current collector 11, the positive electrode active material layer 12, the negative electrode current collector 13, the negative electrode active material layer 14, and the solid electrolyte layer 15.

The positive electrode current collector 11 may be a porous or non-porous sheet, film, etc. made of a metal material such as aluminum, stainless steel, titanium, or an alloy thereof, for example. The aluminum and alloys thereof are inexpensive, and are easily formed into a thin film. The sheet or film may be a metal foil, a mesh, etc.

While the thickness of the positive electrode current collector 11 may be in the range of greater than or equal to 1 µm and less than or equal to 30 µm, for example, this is not limiting. In the case where the thickness of the positive electrode current collector 11 is greater than or equal to 1 µm, the positive electrode current collector 11 has sufficient mechanical strength, and is not easily cracked or broken. In the case where the thickness of the positive electrode current collector 11 is less than or equal to 30 µm, the energy density of the battery 1 can be enhanced.

The positive electrode active material layer 12 is provided in contact with the principal surface of the positive electrode current collector 11 on the side of the negative electrode current collector 13. In the present embodiment, the positive electrode active material layer 12 is smaller than the positive electrode current collector 11 as viewed in plan. The side surface of the positive electrode active material layer 12 is covered by the solid electrolyte layer 15. The positive electrode active material layer 12 may have the same size as the positive electrode current collector 11 as viewed in plan. The side surface of the positive electrode active material layer 12 and the side surface of the positive electrode current collector 11 may be flush with each other.

The positive electrode active material layer 12 is a layer that contains a positive electrode active material. The positive electrode active material layer 12 may be a positive electrode mixture layer that contains a positive electrode active material and a solid electrolyte.

The positive electrode active material contained in the positive electrode active material layer 12 may be a lithium-containing transition metal oxide, a transition metal fluoride, a polyanion or fluorinated polyanion material, a transition metal sulfide, a transition metal oxyfluoride, a transition metal oxysulfide, a transition metal oxynitride, etc., for example. In the case where a lithium-containing transition metal oxide is used as positive electrode active material particles, in particular, the manufacturing cost can be reduced, and the average discharge voltage can be enhanced.

While the thickness of the positive electrode active material layer 12 may be in the range of greater than or equal to 10 µm and less than or equal to 500 µm, for example, this is not limiting. If the thickness of the positive electrode active material layer 12 is greater than or equal to 10 µm, the energy density of the battery 1 can be further enhanced. If the thickness of the positive electrode active material layer 12 is less than or equal to 500 µm, operation with higher output is enabled.

The negative electrode current collector 13 may be a porous or non-porous sheet, film, etc. made of a metal material such as stainless steel, nickel, copper, or an alloy thereof, for example. The copper and alloys thereof are inexpensive, and are easily formed into a thin film. The sheet or film may be a metal foil, a mesh, etc.

While the thickness of the negative electrode current collector 13 may be in the range of greater than or equal to 1 µm and less than or equal to 30 µm, for example, this is not limiting. In the case where the thickness of the negative electrode current collector 13 is greater than or equal to 1 µm, the negative electrode current collector 13 has sufficient mechanical strength, and is not easily cracked or broken. In the case where the thickness of the negative electrode current collector 13 is less than or equal to 30 µm, the energy density of the battery can be enhanced.

The negative electrode active material layer 14 is provided in contact with the principal surface of the negative electrode current collector 13 on the side of the positive electrode current collector 11. In the present embodiment, the negative electrode active material layer 14 is smaller than the negative electrode current collector 13 as viewed in plan. The side surface of the negative electrode active material layer 14 is covered by the solid electrolyte layer 15. The negative electrode active material layer 14 is larger than the positive electrode active material layer 12 as viewed in plan. The negative electrode active material layer 14 may have the same size as the negative electrode current collector 13 as viewed in plan. The side surface of the negative electrode active material layer 14 and the side surface of the negative electrode current collector 13 may be flush with each other.

The negative electrode active material layer 14 is a layer that contains a negative electrode active material. The negative electrode active material layer 14 may be a negative electrode mixture layer that contains a negative electrode active material and a solid electrolyte.

The negative electrode active material contained in the negative electrode active material layer 14 is a material that occludes and releases metal ions, for example. The negative electrode active material may be a material that occludes and releases lithium ions, for example. The negative electrode active material may be lithium metal, metal or an alloy that reacts to be alloyed with lithium, carbon, a transition metal oxide, a transition metal sulfide, etc., for example. The carbon may be graphite or non-graphite carbon such as hard carbon or coke, for example. The transition metal oxide may be CuO, NiO, etc., for example. The transition metal sulfide may be copper sulfide represented as CuS etc., for example. The metal or alloy that reacts to be alloyed with lithium may be an alloy of lithium and a silicon compound, a tin compound, or an aluminum compound, etc., for example. In the case where carbon is used, the manufacturing cost can be reduced, and the average discharge voltage can be enhanced.

While the thickness of the negative electrode active material layer 14 may be in the range of greater than or equal to 10 µm and less than or equal to 500 µm, for example, this is not limiting. If the thickness of the negative electrode active material layer 14 is greater than or equal to 10 µm, the energy density of the battery 1 can be further enhanced. If the thickness of the negative electrode active material layer 14 is less than or equal to 500 µm, operation with higher output is enabled.

The solid electrolyte layer 15 is positioned between the positive electrode active material layer 12 and the negative electrode active material layer 14 in contact with each thereof. In the present embodiment, the solid electrolyte layer 15 covers the side surface of the positive electrode active material layer 12, and is in contact with the positive electrode current collector 11. The solid electrolyte layer 15 covers the side surface of the negative electrode active material layer 14, and is in contact with the negative electrode current collector 13. The solid electrolyte layer 15 is smaller than the positive electrode current collector 11 and the negative electrode current collector 13 as viewed in plan. The solid electrolyte layer 15 may have the same size as the positive electrode current collector 11 and the negative electrode current collector 13 as viewed in plan. That is, the side surface of the solid electrolyte layer 15 and the side surface of each of the positive electrode current collector 11 and the negative electrode current collector 13 may be flush with each other.

The solid electrolyte layer 15 contains a solid electrolyte.

While the thickness of the solid electrolyte layer 15 may be in the range of greater than or equal to 1 µm and less than or equal to 200 µm, for example, this is not limiting. If the thickness of the solid electrolyte layer 15 is greater than or equal to 1 µm, a short circuit between the positive electrode active material layer 12 and the negative electrode active material layer 14 can be suppressed. If the thickness of the solid electrolyte layer 15 is less than or equal to 200 µm, operation with higher output is enabled.

The solid electrolyte contained in the positive electrode active material layer 12, the negative electrode active material layer 14, or the solid electrolyte layer 15 may be a sulfide solid electrolyte, an oxide solid electrolyte, a halide solid electrolyte, a macromolecular solid electrolyte, a complex hydride solid electrolyte, etc., for example.

The sulfide solid electrolyte may be Li₂S-P₂S₅, Li₂S-SiS₂, Li₂S-B₂S₃, Li₂S-GeS₂, Li_{3.25}Ge_{0.25}P_{0.75}S₄, Li₁₀GeP₂S₁₂, etc., for example. LiX (X: F, Cl, Br, or I), Li₂O, or MOₚ or Li_{q}MOᵣ (where M is one of P, Si, Ge, B, Al, Ga, In, Fe, and Zn and p, q, and r are each a natural number) may be added to at least one selected from these.

The oxide solid electrolyte may be a NASICON-type solid electrolyte represented by LiTi₂(PO₄)₃ or an element substitution product thereof, an (LaLi)TiO₃-based perovskite-type solid electrolyte, a LISICON-type solid electrolyte represented by Li₁₄ZnGe₄O₁₆, Li₄SiO₄, LiGeO₄, or an element substitution product thereof, a garnet-type solid electrolyte represented by Li₇La₃Zr₂O₁₂ or an element substitution product thereof, Li₃N or an H substitution product thereof, Li₃PO₄ or an N substitution product thereof, glass or glass ceramics based on an Li-B-O compound such as LiBO₂ or Li₃BO₃ and to which Li₂SO₄, Li₂CO₃, etc. has been added, etc., for example.

The halide solid electrolyte may be a material represented by a composition formula Li_{α}M_{β}X_{γ}, for example. Here, α, β, and γ have a value of greater than 0. M contains at least one selected from metal elements other than Li and metalloid elements. X is one or two or more kinds of elements selected from the group consisting of Cl, Br, I, and F. The metalloid elements include B, Si, Ge, As, Sb, or Te. The metal elements include all the elements included in Group 1 to Group 12 of the periodic table excluding hydrogen, and all the elements included in Group 13 to Group 16 excluding the metalloid elements discussed above and C, N, P, O, S, and Se. That is, the metal elements are a group of elements that may form cations when the element and a halogen compound form an inorganic compound. The halide solid electrolyte may be LisYXe, Li₂MgX₄, Li₂FeX₄, Li(Al, Ga, In)X₄, Li₃(Al, Ga, In)X₆, etc., for example.

The complex hydride solid electrolyte may be LiBH₄-LiI, LiBH₄-P₂S₅, etc., for example.

The macromolecular solid electrolyte may be a compound of a macromolecular compound and a lithium salt, for example. The macromolecular compound may have an ethyleneoxide structure. If the macromolecular compound has an ethyleneoxide structure, a large amount of lithium salt can be contained to further enhance ion conductivity. The lithium salt may be LiPF₆, LiBF₄, LiSbF₆, LiAsF₆, LiSO₃CF₃, LiN(SO₂CF₃)₂, LiN(S0₂C₂F₅)₂, LiN(SO₂CF₃)(SO₂C₄F₉), LiC(SO₂CF₃)₃, etc. The lithium salt may be one kind of lithium salt selected from these and used singly. Alternatively, the lithium salt may be a mixture of two or more kinds of lithium salts selected from these.

At least one selected from the positive electrode active material layer 12, the solid electrolyte layer 15, and the negative electrode active material layer 14 may contain a binding agent for the purpose of improving adhesion among particles. The binding agent is used to improve the binding properties of the materials that constitute the electrodes. The binding agent may be polyvinylidene fluoride, polytetrafluoroethylene, polyethylene, polypropylene, an aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropropylene, styrene-butadiene rubber, carboxymethyl cellulose, etc. Alternatively, the binding agent may be a copolymer of two or more kinds of materials selected from tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether or acrylic acid, and hexadiene. The binding agent may be a mixture of two or more kinds selected from these.

At least one selected from the positive electrode active material layer 12 and the negative electrode active material layer 14 may contain a conductive assistant for the purpose of enhancing conductivity. The conductive assistance may be graphites such as natural graphite and artificial graphite, carbon blacks such as acetylene black and ketjen black, conductive fibers such as carbon fibers and metal fibers, carbon fluoride, metal powders such as aluminum, conductive whiskers such as zinc oxide and potassium titanate, conductive metal oxides such as titanium oxide, conductive macromolecular compounds such as polyaniline, polypyrrole, and polythiophene, etc., for example. A cost reduction can be promoted in the case where the conductive assistance is used.

The power generating element 10 includes principal surfaces 10a and 10b. The principal surface 10a is an example of a first principal surface, and is a surface that is orthogonal to the laminating direction of the layers that constitute the power generating element 10. The principal surface 10a is a surface of the positive electrode current collector 11 on the opposite side of a surface thereof in contact with the positive electrode active material layer 12, for example. The principal surface 10b is an example of a second principal surface on the opposite side of the first principal surface. The principal surface 10b is a surface of the negative electrode current collector 13 on the opposite side of a surface thereof in contact with the negative electrode active material layer 14.

The principal surfaces 10a and 10b have a rectangular shape, for example, as viewed in plan, and have the same size as each other. The principal surfaces 10a and 10b may have a different polygonal shape, such as a square shape, as viewed in plan, and may have a circular shape as viewed in plan.

The area of each of the principal surfaces 10a and 10b of the power generating element 10 is in the range of greater than or equal to 1 cm² and less than or equal to 100 cm² for batteries for portable electronic devices such as smartphones and digital cameras, for example. Alternatively, the area of the principal surfaces of the power generating element 10 may be in the range of greater than or equal to 100 cm² and less than or equal to 1000 cm² for batteries for power sources for large mobile devices such as electric vehicles.

### [1-3. Pressurizing Members]

Next, the pressurizing members 20 and 30 will be described.

The pressurizing member 20 is an example of a first pressurizing member in contact with the principal surface 10a of the power generating element 10. The pressurizing member 20 includes a void 21. The void 21 is an example of a first void, and accommodates therein the extending portion 42 which is a part of the insulating member 40.

The void 21 is provided in a principal surface 20a of the pressurizing member 20 that is not in contact with the power generating element 10. Specifically, the void 21 is a recessed portion that is recessed from the principal surface 20a toward a principal surface 20b. The principal surface 20b is a surface on the opposite side of the principal surface 20a and in contact with the principal surface 10a of the power generating element 10. The void 21 is a bottomed recessed portion that does not penetrate the pressurizing member 20 in the thickness direction. The extending portion 42 is provided so as to cover the bottom of the void 21.

In the present embodiment, the void 21 is a groove that extends in one direction. While the cross section of the void 21 that is orthogonal to the extending direction thereof is rectangular, for example, this is not limiting. The void 21 may be a V-groove or a U-groove. While the width of the void 21 is uniform at any portion in the extending direction, the width of the void 21 may be non-uniform.

The void 21 extends continuously from one end to the other end of the pressurizing member 20 in a direction parallel to the principal surface 10a. Specifically, as illustrated in Fig. 1(a), the void 21 extends continuously from one of the two long sides of the pressurizing member 20 as viewed in plan to the other. The void 21 extends in the y-axis direction in parallel with the short sides of the pressurizing member 20. Consequently, the length (y-axis direction) of the void 21 can be shortened, and thus the extending portion 42 which is formed using a resin material can be easily formed with a uniform thickness.

The extending direction of the void 21 may be inclined to be oblique with respect to the y-axis direction. Alternatively, the void 21 may extend continuously from one of the two short sides of the pressurizing member 20 to the other. For example, the void 21 may extend in the x-axis direction in parallel with the long sides of the pressurizing member 20. The extending direction of the void 21 may be curved.

In the present embodiment, the pressurizing member 20 includes a plurality of voids 21. As illustrated in Fig. 1(a), the plurality of voids 21 are provided in a striped pattern as viewed in plan. That is, the plurality of voids 21 extend in parallel with each other. While the interval of two adjacent voids 21 is constant, the interval may be varied. While the plurality of voids 21 are of the same size and the same shape as each other, the plurality of voids 21 may be of different sizes and shapes. The plurality of voids 21 are provided point-symmetrically with respect to the center of the pressurizing member 20 as viewed in plan.

The pressurizing member 30 is an example of a second pressurizing member in contact with the principal surface 10b of the power generating element 10. The pressurizing member 30 includes a void 31. The void 31 is an example of a second void, and accommodates therein the extending portion 43 which is a part of the insulating member 40.

The void 31 is provided in a principal surface 30a of the pressurizing member 30 that is not in contact with the power generating element 10. Specifically, the void 31 is a recessed portion that is recessed from the principal surface 30a toward a principal surface 30b. The principal surface 30b is a surface on the opposite side of the principal surface 30a and in contact with the principal surface 10b of the power generating element 10. The void 31 is a bottomed recessed portion that does not penetrate the pressurizing member 30 in the thickness direction. The extending portion 43 is provided so as to cover the bottom of the void 31.

In the present embodiment, the pressurizing member 30 includes a plurality of voids 31. The plurality of voids 31 are provided in a striped pattern as viewed in plan. That is, the plurality of voids 31 extend in parallel with each other. While the interval of two adjacent voids 31 is constant, the interval may be varied. While the plurality of voids 31 are of the same size and the same shape as each other, the plurality of voids 31 may be of different sizes and shapes.

The specific configuration of the voids 31 is the same as that of the voids 21. Modifications that are applicable to the voids 21 are also applicable to the voids 31.

The material, nature, shape, etc. that are common to the pressurizing members 20 and 30 will be described below. In the following, the pressurizing members 20 and 30 will be collectively referred to simply as "pressurizing members".

The pressurizing members are harder than the insulating member 40. The pressurizing members may be electrically conductive, and may be electrically insulative. The pressurizing members may contain a resin or metal.

The resin contained in the pressurizing members may be a conductive polymer. If conductivity is imparted to the pressurizing members, the pressurizing members can be used as current collectors. If the pressurizing members also provide the function of the current collectors, it is not necessary that the power generating element 10 should include both of the positive electrode current collector 11 and the negative electrode current collector 13, which makes it possible to reduce the thickness of the power generating element 10. The energy density of the power generating element 10 can be enhanced when the thickness of the power generating element 10 is reduced. In the case where the power generating element 10 does not include the positive electrode current collector 11, the principal surface of the positive electrode active material layer 12 serves as the first principal surface of the power generating element 10, and contacts the pressurizing member. That is, the positive electrode active material layer 12 is directly formed on the principal surface of the pressurizing member. The same also applies to the case where the power generating element 10 does not include the negative electrode current collector 13.

The pressurizing members may contain metal. In the case where the pressurizing members contain metal, there is less possibility of failures such as cracking in the power generating element 10 due to abrupt pressure variations. If conductivity is imparted to the pressurizing members, the pressurizing members can be used as current collectors.

The resin contained in the pressurizing members may be an organic macromolecule such as polyvinylidene fluoride, polytetrafluoroethylene, polyethylene, polypropylene, an aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropropylene, carboxymethyl cellulose, an epoxy resin, etc., for example.

The conductive polymer contained in the pressurizing members may be polyacethylene, polyaniline, polypyrrole, polythiophene, etc., for example.

The metal contained in the pressurizing members may be aluminum, stainless steel, titanium, nickel, copper, magnesium, an alloy thereof, etc., for example.

The pressurizing members may contain an inorganic material. The inorganic material contained in the pressurizing members may be a simple oxide such as SiO₂, MgO, Al₂O₃, and ZrO₂, a composite oxide containing two or more kinds of simple oxides, a metal nitride such as AlN and Si₃N₄, a metal carbide such as SiC, etc.

While the thickness of the pressurizing members may be in the range of greater than or equal to 3 mm and less than or equal to 10 mm, this is not limiting. In the case where the thickness of the pressurizing members is greater than or equal to 3 mm, mechanical strength is secured, and the pressurizing members are not easily cracked or deformed. In addition, the binding pressure for the pressurizing members is enhanced. In the case where the thickness of the pressurizing member is less than or equal to 10 mm, on the other hand, the energy density of the battery 1 can be enhanced.

### [1-4. Insulating Member]

Next, the insulating member 40 will be described.

As illustrated in Fig. 1, the insulating member 40 includes a side surface portion 41 and the extending portions 42 and 43.

The side surface portion 41 is a portion that covers a side surface 10c of the power generating element 10. The side surface portion 41 is in contact with the side surface 10c of the power generating element 10. The side surface portion 41 is provided annularly over the entire periphery of the power generating element 10 as viewed in plan, and covers the entire side surface 10c. The side surface portion 41 may cover only a part of the side surface 10c of the power generating element 10. For example, the side surface portion 41 may cover only side surfaces of the power generating element 10 on the side of the two long sides as viewed in plan, and may not cover side surfaces thereof on the side of the short sides.

The extending portions 42 and 43 extend from the side surface portion 41 into the voids 21 and 31, respectively. The extending portion 42 covers the bottom surface of the void 21 which is a groove. The shape of the extending portion 42 as viewed in plan coincides with the shape of the void 21 as viewed in plan. While the thickness of the extending portion 42 is uniform, the thickness of the extending portion 42 may be non-uniform. The extending portion 42 may fill the entire void 21.

The extending portion 43 substantially completely fills the void 31 which is a groove. The shape of the extending portion 43 as viewed in plan coincides with the shape of the void 31 as viewed in plan. The extending portion 43 may be accommodated in only a part of the inside of the void 31, as with the extending portion 42.

The side surface portion 41 and the extending portions 42 and 43 are integrated with each other. That is, the side surface portion 41 and the extending portions 42 and 43 are formed integrally with each other using the same insulating material. While the insulating material is a resin material, for example, the insulating material may be an inorganic material.

The resin contained in the insulating member 40 may be an organic macromolecule such as polyvinylidene fluoride, polytetrafluoroethylene, polyethylene, polypropylene, an aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinyl pyrrolidone, polyether, polyether sulfone, hexafluoropropylene, carboxymethyl cellulose, an epoxy resin, etc., for example.

The inorganic material contained in the insulating member may be a simple oxide such as SiO₂, MgO, Al₂O₃, and ZrO₂, a composite oxide containing two or more kinds of simple oxides, a metal nitride such as AlN and Si₃N₄, a metal carbide such as SiC, etc.

### (Second Embodiment)

Subsequently, a second embodiment will be described.

The battery according to the second embodiment is different from that according to the first embodiment mainly in the shape of voids provided in pressurizing members. In the following, differences from the first embodiment will be mainly described, and the description of common features will be omitted or simplified.

Fig. 2 includes a top view and sectional views illustrating a schematic configuration of a battery 101 according to the second embodiment. Fig. 2(a) is a plan view of the battery 101 as seen from the positive side of the z axis. Fig. 2(b) is a sectional view taken at a position indicated by the line IIb-IIb in Fig. 2(a). Fig. 2(c) is a sectional view taken at a position indicated by the line IIc-IIc in Fig. 2(a).

As illustrated in Fig. 2, the battery 101 includes a power generating element 10, pressurizing members 120 and 130, and an insulating member 140.

The pressurizing member 120 includes a plurality of voids 121. As illustrated in Fig. 2(a), the plurality of voids 121 are provided in a grid pattern as viewed in plan. That is, the plurality of voids 121 include voids that extend in one direction, and voids that extend in a direction that intersects the one direction. In the present embodiment, the plurality of voids 121 extend along one of the x-axis direction and the y-axis direction. That is, the plurality of voids 121 extend along the short sides or the long sides of the pressurizing member 120 as viewed in plan. The plurality of voids 121 may be arranged in a grid pattern in which the voids 121 obliquely intersect each other as viewed in plan.

The pressurizing member 130 includes a plurality of voids 131. The plurality of voids 131 are provided in a grid pattern as viewed in plan, as with the voids 121. The specific configuration of the voids 131 is the same as that of the voids 121. Modifications that are applicable to the voids 121 are also applicable to the voids 131.

The respective profiles of the plurality of voids 131 and the plurality of voids 121 may coincide with each other as viewed in plan. Alternatively, the extending direction of the voids 131 and the extending direction of the voids 121 may be different from each other. For example, the extending direction of the voids 131 and the extending direction of the voids 121 may intersect each other at an intersection angle of 45°. The intersection angle is not specifically limited.

The insulating member 140 includes a side surface portion 41 and extending portions 142 and 143. The extending portions 142 and 143 are positioned inside the voids 121 and 131, respectively. Therefore, the extending portions 142 and 143 are each arranged in a grid pattern as viewed in plan. That is, the extending portions 142 and 143 constitute a net-like body, which facilitates application of a uniform pressure within the surfaces of the pressurizing members 120 and 130. Therefore, the binding pressure to be applied to the power generating element 10 via the pressurizing members 120 and 130 can be made more uniform within the surfaces.

The battery 101 according to the present embodiment may include the pressurizing member 20 in place of the pressurizing member 120. Alternatively, the battery 101 may include the pressurizing member 30 in place of the pressurizing member 130.

### (Third Embodiment)

Subsequently, a third embodiment will be described.

The battery according to the third embodiment is different from those according to the first and second embodiments mainly in that the voids provided in the pressurizing members are through holes. In the following, differences from the first and second embodiments will be mainly described, and the description of common features will be omitted or simplified.

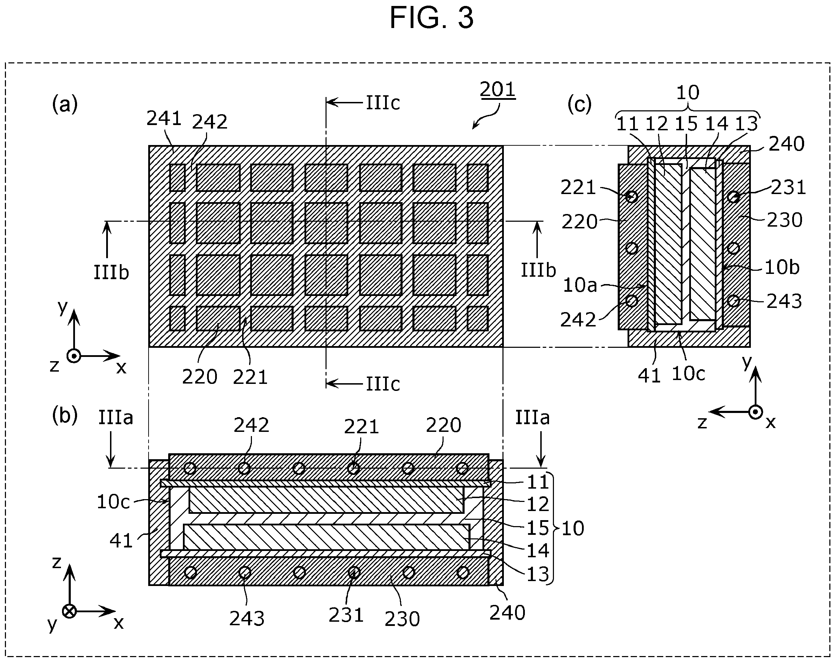

Fig. 3 includes sectional views illustrating a schematic configuration of a battery 201 according to the third embodiment. Fig. 3(a) is a sectional view taken at a position indicated by the line IIIa-IIIa in Fig. 3(b). Fig. 3(b) is a sectional view taken at a position indicated by the line IIIb-IIIb in Fig. 3(a). Fig. 3(c) is a sectional view taken at a position indicated by the line IIIc-IIIc in Fig. 3(a).

As illustrated in Fig. 3, the battery 201 includes a power generating element 10, pressurizing members 220 and 230, and an insulating member 240.

The pressurizing member 220 includes a plurality of voids 221. As illustrated in Figs. 3(b) and 3(c), the plurality of voids 221 are each a through hole that penetrates the pressurizing member 220 in a direction parallel to the principal surface 10a of the power generating element 10. The voids 221 penetrate the pressurizing member 220 from one end to the other end as viewed in plan.

As illustrated in Fig. 3(a), the plurality of voids 221 are provided in a grid pattern as viewed in plan. That is, the plurality of voids 221 include through holes that penetrate the pressurizing member 220 in one direction, and through holes that penetrate the pressurizing member 220 in a direction that intersects the one direction. In the present embodiment, the plurality of voids 221 penetrate the pressurizing member 220 along one of the x-axis direction and the y-axis direction. That is, the plurality of voids 221 penetrate the pressurizing member 220 along the short sides or the long sides thereof as viewed in plan. The plurality of voids 221 may be arranged in a grid pattern in which the voids 221 obliquely intersect each other as viewed in plan.

While the cross-sectional shape of the voids 221 taken in a direction orthogonal to the extending direction thereof is circular, this is not limiting. The cross-sectional shape of the voids 221 may be a polygonal shape such as a square shape or a rectangular shape, or may be an elliptical shape etc. While the cross-sectional area of the voids 221 is uniform at any portion in the extending direction, the cross-sectional area of the voids 221 may be non-uniform.

The pressurizing member 230 includes a plurality of voids 231. The plurality of voids 231 are each a through hole that penetrates the pressurizing member 230 in a direction parallel to the principal surface 10b of the power generating element 10, as with the voids 221. The specific configuration of the voids 231 is the same as that of the voids 221. Modifications that are applicable to the voids 221 are also applicable to the voids 231.

The insulating member 240 includes a side surface portion 41 and extending portions 242 and 243. The extending portions 242 and 243 are positioned inside the voids 221 and 231, respectively. The extending portions 242 and 243 completely fill the inside of the voids 221 and 231, respectively. At least the voids 221 or 231 may include a portion that is not filled with the extending portions 242 or 243.

The voids 221 and 231 may be provided in a striped pattern as viewed in plan, as with the voids 21 and 31 according to the first embodiment.

The battery 201 according to the present embodiment may include the pressurizing member 20 or 120 in place of the pressurizing member 220. Alternatively, the battery 201 may include the pressurizing member 30 or 130 in place of the pressurizing member 230.

### (Fourth Embodiment)

Subsequently, a fourth embodiment will be described.

The battery according to the fourth embodiment is different from those according to the first to third embodiments mainly in that the power generating element includes a plurality of solid-state battery cells connected in parallel. In the following, differences from the first to third embodiments will be mainly described, and the description of common features will be omitted or simplified.

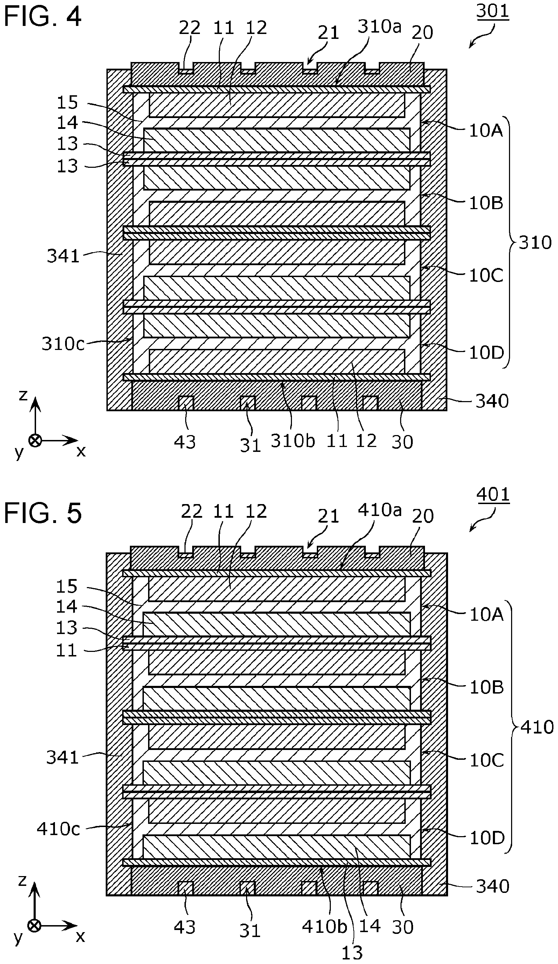

Fig. 4 is a sectional view illustrating a schematic configuration of a battery 301 according to the fourth embodiment. The battery 301 includes a power generating element 310 that includes at least two or more solid-state battery cells. In the example illustrated in Fig. 4, the power generating element 310 includes four solid-state battery cells 10A, 10B, 10C, and 10D. The four solid-state battery cells 10A, 10B, 10C, and 10D each have the same configuration as that of the power generating element 10 according to the first embodiment.

The solid-state battery cells 10A and 10D are each a solid-state battery cell positioned at both ends in the laminating direction (z-axis direction) in the power generating element 310. The power generating element 310 includes principal surfaces 310a and 310b.

The principal surface 310a is an example of a first principal surface, and is a surface that is orthogonal to the laminating direction of the layers that constitute the power generating element 310. In the present embodiment, the principal surface 310a is a surface of the positive electrode current collector 11 of the solid-state battery cell 10A on the opposite side of a surface thereof in contact with the positive electrode active material layer 12, for example.

The principal surface 310b is an example of a second principal surface on the opposite side of the first principal surface. The principal surface 310b is a surface of the positive electrode current collector 11 of the solid-state battery cell 10D on the opposite side of a surface thereof in contact with the positive electrode active material layer 12, for example.

The four solid-state battery cells 10A, 10B, 10C, and 10D are connected in parallel with each other. The phrase "connected in parallel" as used herein means a state in which the positive electrode current collectors or the negative electrode current collectors of two adjacent solid-state battery cells are in direct contact with each other, the positive electrode current collectors included in a group of solid-state battery cells (i.e. the power generating element 310) are connected to each other by a positive electrode current collector terminal (not illustrated), and the negative electrode current collectors included in the power generating element are connected to each other by a negative electrode current collector terminal (not illustrated). The capacity of the battery 301 can be enhanced by connecting the plurality of solid-state battery cells in parallel.

The number of solid-state battery cells connected in parallel is not specifically limited. For example, the number of solid-state battery cells connected in parallel in the power generating element 310 may be two or three, and may be five or more. The capacity of the battery 301 can be enhanced better as the number of solid-state battery cells connected in parallel is increased. The number of solid-state battery cells connected in parallel may be determined as desired in consideration of the ease of handling in manufacturing the all-solid-state battery, the loading space in a device in which the all-solid-state battery is to be used, etc. For example, ten or more and 500 or less solid-state battery cells may be connected in parallel in the battery 301.

In the case where the power generating element 310 including a plurality of solid-state battery cells is bound, as described above, the thickness of the power generating element 310 is increased compared to the case where a single solid-state battery cell is included. Therefore, a pressure loss tends to be caused inside the group of solid-state battery cells. In order to suppress a reduction in the charge/discharge characteristics due to a pressure loss, it is necessary that the power generating element 310 should be bound with a strong binding force compared to the case where a single solid-state battery cell is included.

The battery 301 according to the present embodiment includes pressurizing members 20 and 30 and an insulating member 340. The pressurizing member 20 is in contact with the principal surface 310a of the power generating element 310. The pressurizing member 30 is in contact with the principal surface 310b of the power generating element 310.

The insulating member 340 includes a side surface portion 341 and extending portions 42 and 43. The side surface portion 341 covers a side surface 310c of the power generating element 310. The side surface 310c extends over the plurality of solid-state battery cells 10A, 10B, 10C, and 10D. That is, the side surface portion 341 collectively covers the side surface of each of the plurality of solid-state battery cells 10A, 10B, 10C, and 10D.

Also for the battery 301 including the power generating element 310 including a plurality of laminated solid-state battery cells, as described above, a binding pressure can be applied to the pressurizing members 20 and 30, which are disposed above and below the power generating element 310, by the insulating member 340. Consequently, the plurality of solid-state battery cells can be collectively bound in the laminating direction, which makes it possible to enhance charge/discharge characteristics.

In the case where the power generating element 310 includes a plurality of solid-state battery cells, adjacent solid-state battery cells may be configured to share a positive electrode current collector or a negative electrode current collector. For example, in the case of the battery 301 illustrated in Fig. 4, the negative electrode current collector 13 of the solid-state battery cell 10A and the negative electrode current collector 13 of the solid-state battery cell 10B may be implemented as a single current collector.

### (Fifth Embodiment)

Subsequently, a fifth embodiment will be described.

The battery according to the fifth embodiment is different from those according to the first to fourth embodiments mainly in that the power generating element includes a plurality of solid-state battery cells connected in series. In the following, differences from the first to fourth embodiments will be mainly described, and the description of common features will be omitted or simplified.

Fig. 5 is a sectional view illustrating a schematic configuration of a battery 401 according to the fifth embodiment. The battery 401 includes a power generating element 410 that includes at least two or more solid-state battery cells. In the example illustrated in Fig. 5, the power generating element 410 includes four solid-state battery cells 10A, 10B, 10C, and 10D. The power generating element 410 is different from the power generating element 310 according to the fourth embodiment in the electrical connection among the solid-state battery cells.

The power generating element 410 includes principal surfaces 410a and 410b.

The principal surface 410a is an example of a first principal surface, and is a surface that is orthogonal to the laminating direction of the layers that constitute the power generating element 410. In the present embodiment, the principal surface 410a is a surface of the positive electrode current collector 11 of the solid-state battery cell 10A on the opposite side of a surface thereof in contact with the positive electrode active material layer 12, for example.

The principal surface 410b is an example of a second principal surface on the opposite side of the first principal surface. The principal surface 410b is a surface of the negative electrode current collector 13 of the solid-state battery cell 10D on the opposite side of a surface thereof in contact with the negative electrode active material layer 14, for example.

Specifically, the four solid-state battery cells 10A, 10B, 10C, and 10D are connected in series with each other. The phrase "connected in series" as used herein means a state in which the positive electrode current collector and the negative electrode current collector of two adjacent solid-state battery cells are in direct contact with each other. The voltage of the battery 401 can be enhanced by connecting the plurality of solid-state battery cells in series.

The number of solid-state battery cells connected in series is not specifically limited. For example, the number of solid-state battery cells connected in series in the power generating element 410 may be two or three, and may be five or more. The voltage of the battery 401 can be enhanced better as the number of solid-state battery cells connected in series is increased. The number of solid-state battery cells connected in series may be determined as desired in consideration of the ease of handling in manufacturing the all-solid-state battery, the loading space in a device in which the all-solid-state battery is to be used, the control voltage of the device of use, etc. For example, two or more and 500 or less solid-state battery cells may be connected in series in the battery 401.

The battery 401 according to the present embodiment includes pressurizing members 20 and 30 and an insulating member 340. The pressurizing member 20 is in contact with the principal surface 410a of the power generating element 310. The pressurizing member 30 is in contact with the principal surface 410b of the power generating element 310. The insulating member 340 includes the side surface portion 341 which covers a side surface 410c of the power generating element 410, as in the third embodiment. The side surface 410c extends over the plurality of solid-state battery cells 10A, 10B, 10C, and 10D. That is, the side surface portion 341 collectively covers the side surface of each of the plurality of solid-state battery cells 10A, 10B, 10C, and 10D.

Also for the battery 401 including the power generating element 410 including a plurality of laminated solid-state battery cells, as described above, a binding pressure can be applied to the pressurizing members 20 and 30, which are disposed above and below the power generating element 410, by the insulating member 340. Consequently, the plurality of solid-state battery cells can be collectively bound in the laminating direction, which makes it possible to enhance charge/discharge characteristics.

In the case where the power generating element 410 includes a plurality of solid-state battery cells, adjacent solid-state battery cells may be configured to share a positive electrode current collector or a negative electrode current collector. For example, in the case of the battery 401 illustrated in Fig. 5, the negative electrode current collector 13 of the solid-state battery cell 10A and the positive electrode current collector 11 of the solid-state battery cell 10B may be implemented as a single bipolar current collector.

The bipolar current collector is an electrode that provides both the respective functions of a positive electrode current collector and a negative electrode current collector. Use of the bipolar current collector allows two current collectors, namely a positive electrode current collector and a negative electrode current collector, to be implemented by a single bipolar current collector. The energy density of the battery 401 can be enhanced by reducing the thickness of the power generating element 410 by decreasing the number of current collectors.

The bipolar current collector may be a porous or non-porous sheet, film, etc. made of a metal material such as stainless steel, nickel, copper, and an alloy thereof, for example. The sheet or film may be a metal foil, a mesh, etc.

While the thickness of the bipolar current collector may be in the range of greater than or equal to 1 µm and less than or equal to 30 µm, this is not limiting. If the thickness of the bipolar current collector is greater than or equal to 1 µm, the bipolar current collector has sufficient mechanical strength, and is not easily cracked or broken. If the thickness of the bipolar current collector is less than or equal to 30 µm, the energy density of the battery 401 can be enhanced.

### (Method of Manufacturing Battery)

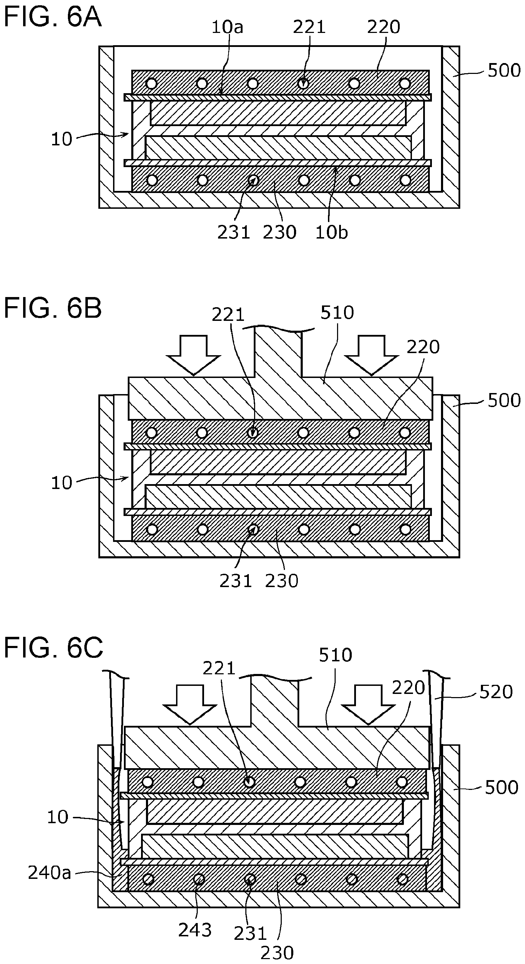

A method of manufacturing the battery according to each of the embodiments discussed above will be described below with reference to Figs. 6A to 6D. Figs. 6A to 6D are each a sectional view illustrating a step of the method of manufacturing the battery according to the present embodiment. While the method of manufacturing the battery 201 according to the third embodiment will be described below, the other batteries can also be manufactured in a similar manner.

### [Arrangement Step]

First, as illustrated in Fig. 6A, the pressurizing member 220 is disposed in contact with the principal surface 10a of the power generating element 10, and the pressurizing member 230 is disposed in contact with the principal surface 10b of the power generating element 10. The voids 221 and 231 are formed in the pressurizing members 220 and 230, respectively. For example, the pressurizing member 230, the power generating element 10, and the pressurizing member 220 are sequentially disposed on the bottom surface of a support container 500.

The pressurizing member 220 which includes the voids 221 is formed by integral molding using a material that constitutes the pressurizing member 220, for example. Alternatively, the pressurizing member 220 may be formed by processing a material that constitutes the pressurizing member 220 into a flat plate shape and thereafter forming the voids 221 by machining etc. The same also applies to the pressurizing member 230.

### [Pressurizing Step]

Next, as illustrated in Fig. 6B, the power generating element 10 is interposed between the pressurizing member 220 and the pressurizing member 230 to be pressurized. Specifically, the power generating element 10 is pressurized in the laminating direction using a pressing jig 510. The pressing jig 510 makes surface contact with the upper surface of the pressurizing member 220, and covers the entire upper surface thereof, for example.

This pressurization applies a uniform pressure to the entire surface of the power generating element 10. The pressurization method may be any appropriate method such as mechanical pressurization in which the pressing jig 510 is used and gas pressurization, for example. In the mechanical pressurization, drive of a motor is converted into a pressure in the laminating direction of the power generating element 10 via a ball screw or a hydraulic pressure, for example. In the gas pressurization, a pressure is applied in the laminating direction of the power generating element 10 by a pressurized gas charged in a gas cylinder, for example.

While the pressure to be applied in the pressurizing step may be greater than or equal to 1 MPa, for example, this is not limiting. The pressure may be greater than or equal to 5 MPa, greater than or equal to 10 MPa, or greater than or equal to 15 MPa. While the pressure to be applied in the pressurizing step may be less than or equal to 95 MPa, for example, this is not limiting. For example, the pressure may be greater than or equal to 90 MPa, greater than or equal to 85 MPa, or greater than or equal to 80 MPa.

### [Injection Step]

Next, as illustrated in Fig. 6C, a fluid insulating material 240a is disposed so as to cover the side surface 10c of the power generating element 10 and be accommodated inside the voids 221 and 231 while pressurizing. Specifically, the insulating material 240a is injected so as to cover the periphery of the power generating element 10 using a nozzle 520 while maintaining the pressure applied in the pressurizing step described above. At this time, the support container 500 functions as a frame member for holding the insulating material 240a. The insulating material 240a is injected to the inside of the voids 221 and 231 provided in the pressurizing members 220 and 230, respectively.

The frame member may be separate from the support container 500. The frame member is formed from general-purpose metal such as aluminum or stainless steel, special steal containing carbon etc., or the like. The frame member is removed after the insulating material 240a is cured.

The terminals (not illustrated) of the power generating element 10 may be led out so as to prevent physical contact between the positive electrode and the negative electrode and maintain insulation therebetween. The means for leading out such terminals is not specifically limited.

The insulating material 240a may be a material which is easy to inject and the viscosity of which during injection is not excessively high in order to ensure that the material reaches the end portions, in planar directions, of the power generating element 10 to be protected. While the viscosity of the insulating material 240a may be less than or equal to 200 mPa·s at 25°C, for example, this is not limiting. The viscosity of the insulating material 240a may be less than or equal to 150 mPa·s, less than or equal to 100 mPa·s, less than or equal to 50 mPa·s, less than or equal to 30 mPa·s, or less than or equal to 20 mPa·s at 25°C, for example. While the viscosity of the insulating material 240a is less than or equal to 200 mPa·s at 60°C, for example, in the case where a thermosetting resin is selected, this is not limiting. The viscosity of the insulating material 240a may be less than or equal to 150 mPa·s, less than or equal to 100 mPa·s, less than or equal to 50 mPa·s, less than or equal to 30 mPa·s, or less than or equal to 20 mPa·s at 60°C, for example.

The insulating material 240a may have a low viscosity of less than or equal to 200 cps, for example, at 25°C or 60°C at the time of injection, and may be a curable resin.

### [Curing Step]

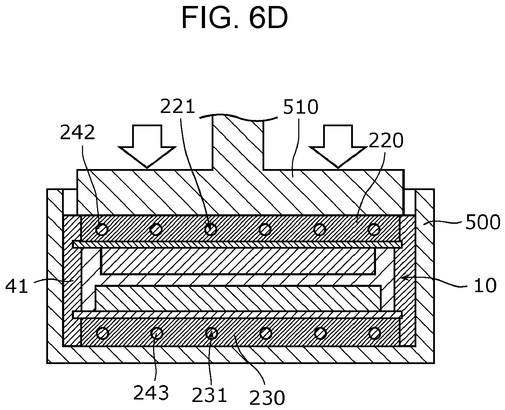

Next, as illustrated in Fig. 6D, the insulating material 240a is cured while pressurizing. The curing is performed as appropriate in accordance with the type of the curable resin used. The curing step may be performed by heating or leaving the resin material at rest at room temperature, for example.

The battery 201 fabricated through the steps described above is kept in the pressurized state by the pressurizing members 220 and 230 and the insulating member 240 even when released from the pressurization. Therefore, good battery characteristics can be maintained even without a binding jig.

In the methods of manufacturing the batteries 1 and 101 according to the first and second embodiments, the pressurizing members 20 and 30 or the pressurizing members 120 and 220 may be used in place of the pressurizing members 220 and 230, respectively, in the arrangement step described above. In the methods of manufacturing the batteries 301 and 401 according to the fourth and fifth embodiments, the power generating elements 310 or 410, that is, a plurality of solid-state battery cells, may be disposed in a laminated manner in place of the power generating element 10 in the arrangement step described above.

### (Other Embodiments)

While the battery according to one or a plurality of aspects and the method of manufacturing the battery have been described above on the basis of the embodiments, the present disclosure is not limited to such embodiments. Aspects obtained by applying various modifications conceived of by a person skilled in the art to the present embodiments and aspects constituted by combining constituent elements according to different embodiments also fall within the scope of the present disclosure unless such aspects depart from the scope and spirit of the present disclosure.

For example, the pressurizing member may include only one void. The one void may extend continuously from one end to the other end through the center of the pressurizing member as viewed in plan, for example. Consequently, a binding pressure can be applied so as to bind the respective centers of the two pressurizing members, since the extending portion of the insulating member passes through the center of the pressurizing member as viewed in plan.

The void may not extend continuously from one end to the other end of the pressurizing member, for example. For example, the void 21 according to the first embodiment may extend from one end to a predetermined position inside the pressurizing member 20 as viewed in plan, and may not extend to the other end thereof. That is, the length of the void 21 may be shorter than the length of the short sides of the pressurizing member 20. For example, the length of the void 21 may be shorter than half the length of the short sides of the pressurizing member 20. The same also applies to the void 31 and the voids 121 and 131 according to the second embodiment.

The voids 221 and 231 according to the third embodiment may not penetrate the pressurizing members 220 and 230, respectively. That is, the voids 221 and 231 may be recessed portions that are recessed from the side surfaces of the pressurizing members 220 and 230, respectively.

The pressurizing members may be porous (porous bodies), for example.

The battery according to each of the embodiments may be housed in an exterior body, for example. The exterior body is disposed so as to cover the entire battery including the pressurizing members and the insulating member. The exterior body may be a resin-laminated metal foil having a resin film on one or two surfaces of a metal foil. Examples of the resin-laminated metal foil include a resin-laminated metal foil constituted such that a resin film for imparting mechanical strength is laminated on one surface of a metal foil and a resin film having heat sealing properties is laminated on a surface on the opposite side thereof.

Examples of the metal foil in the resin-laminated metal foil include a foil made of aluminum, an aluminum alloy, etc. Examples of the resin film for maintaining mechanical strength include a film made of polyester, nylon, etc. Examples of the resin film having heat sealing properties include a film made of polyolefin such as polyethylene and polypropylene, etc.

The laminate film that constitutes the exterior body may be embossed on one or two surfaces thereof.

A variety of modifications, replacements, additions, omissions, etc. may be made to each of the embodiments described above within the scope of the claims and equivalents thereof.

### Industrial Applicability

The battery according to the present disclosure may be used in in-vehicle batteries, various electronic devices, etc. as an all-solid lithium-ion secondary battery etc., for example.

### Reference Signs List

1, 101, 201, 301, 401 battery
10, 310, 410 power generating element
10A, 10B, 10C, 10D solid-state battery cell
10a, 10b, 20a, 20b, 30a, 30b, 310a, 310b, 410a, 410b principal surface
10c, 310c, 410c side surface
11 positive electrode current collector
12 positive electrode active material layer
13 negative electrode current collector
14 negative electrode active material layer
15 solid electrolyte layer
20, 30, 120, 130, 220, 230 pressurizing member
21, 31, 121, 131, 221, 231 void
40, 140, 240, 340 insulating member
41, 341 side surface portion
42, 43, 142, 143, 242, 243 extending portion
240a insulating material
500 support container
510 pressing jig
520 nozzle

## Claims

1. A battery comprising:
a power generating element that includes at least one solid-state battery cell that includes a positive electrode, a solid electrolyte layer, and a negative electrode which are laminated;
a first pressurizing member in contact with a first principal surface of the power generating element;
a second pressurizing member in contact with a second principal surface of the power generating element, the second principal surface being opposite to the first principal surface; and
an insulating member,
wherein the first pressurizing member includes a first void,
the second pressurizing member includes a second void, and
the insulating member includes
a side surface portion that covers a side surface of the power generating element, and
an extending portion that extends from the side surface portion into each of the first void and the second void.

2. The battery according to claim 1,
wherein the first void extends continuously from one end to the other end of the first pressurizing member in a direction parallel to the first principal surface.

3. The battery according to claim 1 or 2,
wherein the first void is a through hole that penetrates the first pressurizing member in a direction parallel to the first principal surface.

4. The battery according to any one of claims 1 to 3,
wherein the first pressurizing member includes a plurality of first voids, and
the plurality of first voids are provided in a striped pattern as viewed in plan.

5. The battery according to any one of claims 1 to 3,
wherein the first pressurizing member includes a plurality of first voids, and
the plurality of first voids are provided in a grid pattern as viewed in plan.

6. The battery according to any one of claims 1 to 5,
wherein the insulating member contains an insulative resin material.

7. The battery according to any one of claims 1 to 6,
wherein each of the first pressurizing member and the second pressurizing member is harder than the insulating member.

8. The battery according to any one of claims 1 to 7,
wherein the power generating element includes a plurality of solid-state battery cells, and
the plurality of solid-state battery cells are laminated in a direction orthogonal to the first principal surface.

9. The battery according to claim 8,
wherein the plurality of solid-state battery cells are electrically connected in series, and
the first pressurizing member and the second pressurizing member are electrically conductive.

10. A method of manufacturing a battery, comprising:
disposing a first pressurizing member including a first void in contact with a first principal surface of a power generating element that includes at least one solid-state battery cell that includes a positive electrode, a solid electrolyte layer, and a negative electrode which are laminated, and disposing a second pressurizing member including a second void in contact with a second principal surface of the power generating element;
pressurizing the power generating element as interposed between the first pressurizing member and the second pressurizing member;
disposing a fluid insulating material so as to cover a side surface of the power generating element and be accommodated inside each of the first void and the second void while pressurizing the power generating element; and
curing the insulating material while pressurizing the power generating element.
